# EUROPÄISCHE PATENTSCHRIFT

(11) **EP 1 340 636 B1**
(45) Veröffentlichungstag und Bekanntmachung des Hinweises auf die Patenterteilung: **14.06.2006**
(21) Anmeldenummer: 02026285.3
(22) Anmeldetag: 27.11.2002
(51) Int. Cl.: B60H 1/22

(54) **Abschlusskappenanordnung für eine Wärmetauscheranordnung, insbesondere für ein Fahrzeugheizgerät**
End cap for a heat exchanger assembly, in particular for a vehicle heater
Capuchon d'embout pour un ensemble d'échangeur de chaleur, en particulier pour un dispositif de chauffage pour véhicule

(30) Priorität: 01.03.2002 DE 10208852
(43) Veröffentlichungstag der Anmeldung: 03.09.2003
(73) Patentinhaber: J. Eberspächer GmbH & Co. KG, 73730 Esslingen (DE)
(72) Erfinder: Schlecht, Patric, 73760 Ostfildern (DE); Collmer, Andreas, 73760 Ostfildern (DE); Wagner, Jürgen, 73207 Plochingen (DE)

(56) Entgegenhaltungen:
- DE-A- 1 554 729
- US-A- 2 973 033
- US-A- 3 614 948
- US-A1- 2002 070 010

## Beschreibung

Die vorliegende Erfindung betrifft eine Abschlusskappenanordnung für eine Wärmetauscheranordnung, insbesondere für ein Fahrzeugheizgerät.

Bei in Fahrzeugheizgeräten eingesetzten Wärmetauscheranordnungen durchströmt ein zu erwärmendes Medium, beispielsweise zur Erwärmung eines Fahrzeuginnenraums dienende Luft, eine Wärmetauscheranordnung näherungsweise in einer axialien Richtung, bezogen auf eine Wärmetauscherlängsachse, und verlässt die Wärmetauscheranordnung an einer Austrittsquerschnittsfläche in einem Endbereich derselben, wie aus US 3614948 bekannt. Die erwärmte Luft muss dann zur möglichst gleichmäßigen Verteilung in einem Fahrzeuginnenraum zu mehreren Austrittsdüsen geleitet werden. Um die den Wärmetauscher verlassende erwärmte Luft in mehrere Strömungskanäle zu verteilen, kann so vorgegangen werden, dass auf das Ende des Wärmetauschers ein T-Stück-artiger Abschluss aufgesetzt wird, in welchen die den Wärmetauscher verlassende Luft eintritt und welcher dann diese Luft in zwei Kanalbereiche aufteilt. Da der den Wärmetauscher verlassende Luftstrom keine gleichmäßige Temperaturverteilung hat, führt eine derartige Anordnung im Allgemeinen zu dem Problem, dass bei Aufteilung des im T-Stück zunächst gesammelten Luftstroms die versorgten Kanalbereiche Luft unterschiedlicher Temperatur aufnehmen, was der Anforderung einer möglichst gleichmäßigen Erwärmung des Fahrzeuginnenraums gegenläufig ist.

Es ist die Aufgabe der vorliegenden Erfindung, eine Abschlusskappenanordnung für eine Wärmetauscheranordnung, insbesondere für ein Fahrzeugheizgerät, vorzusehen, welche eine gleichmäßige, insbesondere auch hinsichtlich der Temperatur gleichmäßige Verteilung des die Wärmetauscheranordnung verlassenden Fluidstroms ermöglicht.

Gemäß der vorliegenden Erfindung wird diese Aufgabe gelöst durch eine Abschlusskappenanordnung für eine Wärmetauscheranordnung, insbesondere für ein Fahrzeugheizgerät, umfassend eine Aufnahmezone zur Anbringung an der Wärmetauscheranordnung und zur Aufnahme eines die Wärmetauscheranordnung in einer ersten Strömungsrichtung verlassenden Fluidstroms, eine Mischzone zum Vermischen der an verschiedenen Bereichen die Wärmetauscheranordnung verlassenden und in die Aufnahmezone eintretenden Fluidteilströme, wenigstens zwei Abgabezonen zum Abgeben des die Mischzone verlassenden Fluidstroms aus der Abschlusskappenanordnung.

In der erfindungsgemäßen Abschlusskappenanordnung ist eine Mischzone vorgesehen, welche dafür sorgt, dass die Temperaturschichtung des die Wärmetauscheranordnung verlassenden Fluidstroms aufgehoben wird und zu den verschiedenen Abgabezonen ein Gesamtfluidstrom näherungsweise homogener Temperatur geleitet wird.

Gemäß einem besonders vorteilhaften Aspekt der vorliegenden Erfindung wird die Durchmischung verschiedener Fluidteilströme in der Mischzone dadurch erlangt, dass die Mischzone einen ersten Strömungskanalbereich umfasst, welcher von der Aufnahmezone im Wesentlichen quer zur ersten Strömungsrichtung weg führt. Durch das seitliche Ableiten des Fluidstroms - bezogen auf die erste Strömungsrichtung - wird durch die dazu erforderliche Strömungsumlenkung eine sehr gute Vermischung der den gesamten Fluidstrom bildenden Fluidteilströme erlangt. Einen weiteren Beitrag hierzu kann die Mischzone dadurch liefern, dass sie eine geringere Strömungsquerschnittsfläche bereitstellt, als die Aufnahmezone.

Gemäß einem vorteilhaften Aspekt der erfindungsgemäßen Abschlusskappenanordnung kann vorgesehen sein, dass eine erste der Abgabezonen einen zweiten Strömungskanalbereich aufweist, welcher wenigstens abschnittsweise neben dem ersten Strömungskanalbereich der Mischzone liegend ausgebildet ist. Dies kann in baulich sehr einfacher Weise dadurch erlangt werden, dass die Mischzone von der ersten Abgabezone durch einen Trennwandungsabschnitt getrennt ist.

Ein definerter Einfluss auf die Aufteilung des die Mischzone verlassenden Gesamtfluidstroms auf die verschiedenen Abgabezonen kann dadurch genommen werden, dass der erste Strömungskanalbereich für den die Mischzone durchströmenden Fluidstrom im Wesentlichen eine zweite Strömungsrichtung vorgibt, die näherungsweise entgegengesetzt ist zu einer dritten Strömungsrichtung, welche der zweite Strömungskanalbereich der ersten der Abgabezonen für den in diese eintretenden Fluidteilstrom vorgibt. Weiter kann vorgesehen sein, dass eine zweite der Abgabezonen einen dritten Strömungskanalbereich aufweist, welcher an den ersten Strömungskanalbereich der Mischzone anschließend ausgebildet ist und für einen in diesen eintretenden Fluidteilstrom eine vierte Strömungsrichtung vorgibt, welche näherungsweise der zweiten Strömungsrichtung des durch die Mischzone hindurchströmenden Fluidstroms entspricht. Hierbei ist es dann vorteilhaft, wenn die dritte Strömungsrichtung der vierten Strömungsrichtung im Wesentlichen entgegengesetzt gerichtet ist.

Ein weiterer Einfluss auf die Aufteilung des die Mischzone verlassenden Gesamtfluidstroms kann dadurch erlangt werden, dass der zweite Strömungskanalbereich und der dritte Strömungskanalbereich zueinander unterschiedliche Strömungsquerschnittsflächen aufweisen. Dabei kann dann vorgesehen sein, dass der zweite Strömungskanalbereich eine geringere Strömungsquerschnittsfläche aufweist, als der dritte Strömungskanalbereich.

Gemäß einem weiteren vorteilhaften Aspekt der vorliegenden Erfindung kann die Abschlusskappenanordnung derart ausgebildet sein, dass sie einen zur Verbindung mit einer Wärmetauscheranordnung ausgebildeten Grundkörper aufweist, in welchem wenigstens eine der Abgabezonen als integraler Bestandteil ausgebildet ist, und dass wenigstens eine weitere der Abgabezonen im Wesentlichen durch ein an den Grundkörper anbringbares Ansatzteil bereitgestellt ist.

Die Erfindung wird nachfolgend mit Bezug auf die beiliegenden Zeichnungen anhand bevorzugter Ausgestaltungsformen detailliert beschrieben. Es zeigt:

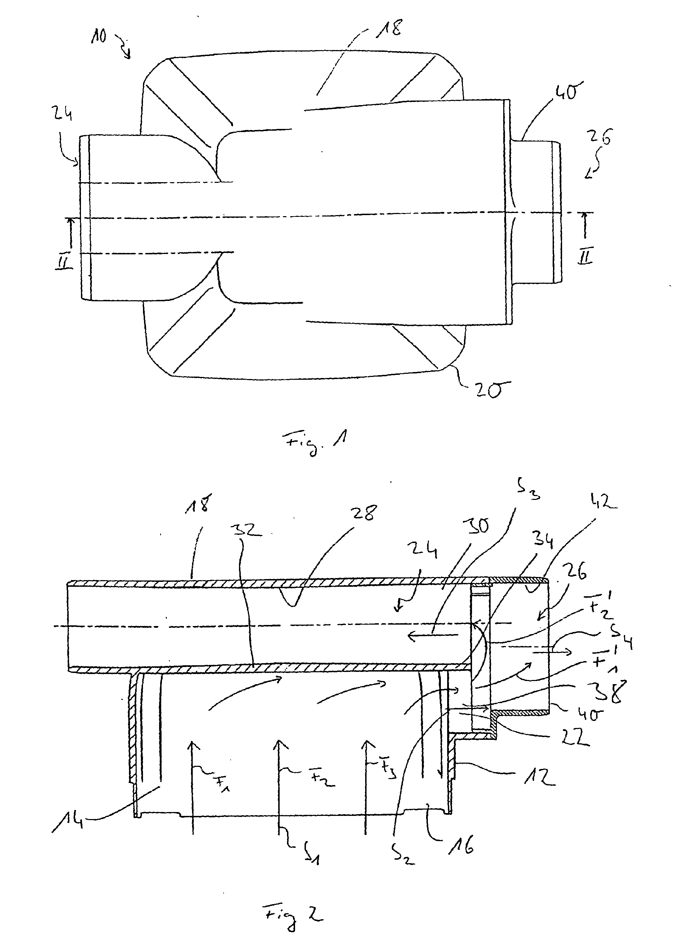

- Fig. 1: eine Draufsicht auf eine erfindungsgemäße Abschlusskappenanordnung;
- Fig. 2: eine Längsschnittansicht der in Fig. 1 dargestellten Abschlusskappenanordnung, geschnitten längs einer Linie I-I;
- Fig. 3: eine perspektivische Explosionsansicht der erfindungsgemäßen Abschlusskappenanordnung von der Unterseite;
- Fig. 4: eine weitere perspektivische Explosionsansicht der erfindungsgemäßen Abschlusskappenanordnung von einer Seite betrachtet.

In den Figuren ist eine erfindungsgemäße Abschlusskappe für eine Wärmetauscheranordnung eines Fahrzeugheizgerätes allgemein mit dem Bezugszeichen 10 bezeichnet. Die Abschlusskappe 10 umfasst einen im Wesentlichen zylindrisch geformten und im Querschnitt näherungsweise rechteckigen bzw. quadratischen Verbindungsabschnitt 12, der zur Anbringung an dem axial offenen Endbereich eines Wärmetauschergehäuses ausgebildet ist. Dieser Verbindungsabschnitt 12 bildet eine Aufnahmezone 14, in welche der die Wärmetauscheranordnung verlassende Fluidstrom in einer ersten Strömungsrichtung S₁ eintritt. An der einer Eintrittsöffnung 16 entgegengesetzten axialen Endseite ist die Aufnahmezone 14 durch eine Abschlusswandung 18 eines Grundkörpers 20 der Abschlusskappenanordnung 10 abgeschlossen. Durch diesen axialen Abschluss wird erzwungen, dass der in die Aufnahmezone 14 eintretende Fluidstrom seitlich abgelenkt wird und in eine allgemein mit 22 bezeichnete Mischzone einströmt. Der die Mischzone 22 verlassende Fluidstrom wird aufgeteilt in zwei Teilströme, von welchen einer in eine erste Abgabezone 24 eintritt, während der andere in eine zweite Abgabezone 26 eintritt.

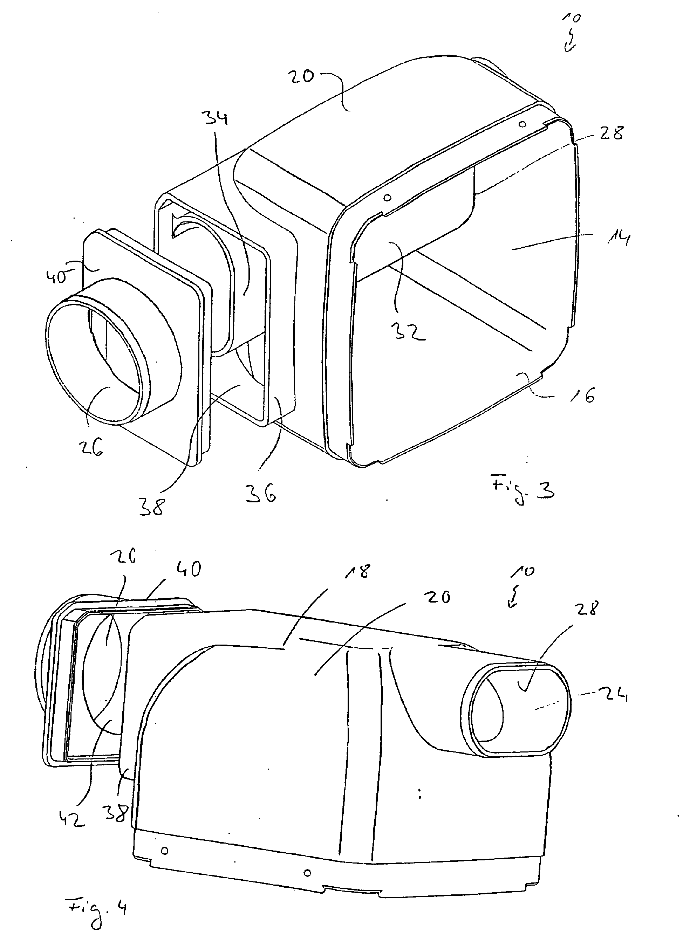

Man erkennt in den Fig. 2 und 3, dass an der der Eintrittsöffnung 16 entgegengesetzten Seite des Grundkörpers 20 an diesem integral angeformt ein zur ersten Strömungsrichtung S₁ näherungsweise quer liegender Strömungskanalbereich 28 vorgesehen ist. In einem axialen Endbereich 30 liegt dieser neben der Mischzone 22. Dabei trennt eine den Strömungskanalbereich 28 auch zur Aufnahmezone 14 hin abschließende Wandung 32 mit einem Wandungsabschnitt 34 die Mischzone 22 von der ersten Abgabezone 24 bzw. dem Strömungskanalbereich 28. Die Mischzone ist also im Wesentlichen begrenzt durch den Wandungsabschnitt 34 und einen weiteren am Grundkörper 20 vorgesehenen und den Wandungsabschnitt 34 umgebenden Wandungsabschnitt 36, so dass zwischen den beiden Wandungsabschnitten 34 und 36 ein weiterer Strömungskanalbereich 38 gebildet ist, den der die Aufnahmezone 14 verlassende Fluidstrom näherungsweise in einer zweiten Strömungsrichtung S₂ durchströmt, die zur ersten Strömungsrichtung S₁, mit welcher der Fluidstrom in die Aufnahmezone 14 eintritt, im Wesentlichen quer steht. Es ist selbstverständlich, dass durch die Umlenkung auch noch andere Strömungsrichtungskomponenten vorhanden sein können. Von Bedeutung ist hier die tendenzielle bzw. vorherrschende Strömungsrichtung in den verschiedenen Zonen.

Der Strömungskanalbereich 38 weist im Wesentlichen eine Strömungsquerschnittsfläche auf, die in der dargestellten Ausgestaltungsform gebildet ist durch die Differenz der vom Wandungsbereich 36 umgebenen Strömungsquerschnittsfläche und der vom Wandungsbereich 34 umgebenen Strömungsquerschnittsfläche. Vor allem in Fig. 3 erkennt man, dass die für den Strömungskanalbereich 38 bereitgestellte Strömungsquerschnittsfläche deutlich geringer ist, als die Strömungsquerschnittsfläche der Aufnahmezone 14 im Bereich ihrer Eintrittsöffnung 16. Aufgrund der hier also vorhandenen Drosselwirkung des Strömungskanalbereichs 38 und der erzwungenen Umlenkung des Fluidstroms wird erlangt, dass die in verschiedenen Bereichen der Eintrittsöffnung 16 in die Aufnahmezone 14 eintretenden Fluidteilströme F₁, F₂, F₃ usw., welche selbstverständlich hier als verschiedene Volumenbereiche des Gesamtfluidstroms zu betrachten sind und welche im Allgemeinen Fluid mit unterschiedlicher Temperatur führen werden, miteinander sehr gut vermischt werden, so dass der die Mischzone 22 verlassende Fluidstrom eine sehr homogene Temperatur aufweisen wird. Wie bereits voranstehend ausgeführt, wird der die Mischzone 22 verlassende Fluidstrom aufgeteilt in zwei Teilströme F'₁ und F'₂. Während der Teilstrom F'₂ aufgrund der Tatsache, dass der Strömungskanalbereich 28 für das in diesem geführte Fluid eine dritte Strömungsrichtung S₃ vorsieht, die zur zweiten Strömungsrichtung S₂ in der Mischzone 22 näherungsweise entgegengesetzt ist, näherungsweise um 180° umgelenkt wird, tritt der in die Abgabezone 26 eintretende Fluidteilstrom F'₁ näherungsweise ohne Richtungsumlenkung in diese ein und wird von dieser im Wesentlichen in einer vierten Strömungsrichtung S₄ weitergeführt. Es sei darauf hingewiesen, dass diese zweite Abgabezone 26 im Wesentlichen durch ein Ansatzteil 40 bereitgestellt ist, das an den Wandungsbereich 36 des Grundkörpers 20 angesetzt bzw. in diesen eingesteckt ist. Das Aufteilen in einen Grundkörper 20 einerseits und das Ansatzteil 40 andererseits ist aus fertigungstechnischen Gründen vorteilhaft, da dann an diesen beiden Bauteilen die jeweils erforderlichen Entformungsschrägen bereitgestellt werden können. Es sei darauf hingewiesen, dass selbstverständlich auch eine andere Auftrennung in zwei zueinander im Wesentlichen symmetrische Halbschalen möglich ist. Das Ansatzteil 40 reduziert die Strömungsquerschnittsfläche auf eine näherungsweise kreisrunde Form mit einer geringeren Flächenabmessung,als die durch den Wandungsabschnitt 36 umgebene Strömungsquerschnittsfläche. Insbesondere definiert das Ansatzteil 40 einen weiteren Strömungskanalbereich 42 der zweiten Abgabezone 26.

Um den die Mischzone 22 verlassenden Fluidstrom mit homogener Temperaturverteilung in definierter Art und Weise auf die beiden Strömungskanalbereiche 28, 42 aufzuteilen, können verschiedene Maßnahmen ergriffen werden. Zum einen spielt selbstverständlich das Verhältnis der Querschnittsabmessung des Strömungskanalbereichs 28 zur Querschnittsabmessung des Strömungskanalbereichs 42 eine wesentliche Rolle für die mengenmäßige Aufteilung in die beiden Teilströme F'₂, F'₁. Eine weitere wesentliche Rolle spielt die Länge des Wandungsabschnitts 34. Je weiter dieser Wandungsabschnitt 34 in Richtung zweite Abgabezone 26, d.h. in Richtung Strömungskanalbereich 42, gezogen ist, desto geringer wird der Anteil der in den Teilstrom F'₂ übergehenden erwärmten Luft sein.

Die beiden Strömungskanalbereiche 28, 42 im Grundkörper 20 bzw. im Ansatzteil 40, bilden an ihren freien Endbereichen jeweilige Anschlussbereiche, in welchen dann Luftführungskanäle angeschlossen werden, um die erwärmte Luft dann zu verschiedenen Austrittsdüsen im Fahrzeuginnenraum zu leiten. Aufgrund der Anforderung, die Luft möglichst gleichmäßig zu verteilen, d.h. im Bereich der verschiedenen Austrittsdüsen dafür zu sorgen, dass gleiche Luftmengen aus diesen austreten, ist es vorteilhaft, an den Strömungskanalbereich 42 mit größerer Strömungsquerschnittsfläche, also geringerem Strömungswiderstand, ein Kanalsystem anzuschließen, das zu weiter entfernt liegenden Düsen führt und somit insgesamt einen größeren Strömungswiderstand bereitstellt. An den Strömungskanalbereich 28 kann dann ein Kanalsystem angeschlossen werden, das zu näher am Heizgerät liegenden Düsen führt. Auf diese Art und Weise wird neben der bereits vorangehend beschriebenen Homogenisierung der Temperatur für die beiden abgegebenen Teilströme F'₂ und F'₁ auch dafür gesorgt, dass durch Bereitstellen unterschiedlicher Luftmengen den verschiedenen Strömungsverhältnissen bzw. Strömungswiderständen Rechnung getragen wird und somit neben der Abgabe gleichmäßig warmer Luftströme auch die Abgabe gleichmäßiger bzw. definiert vorgegebener Luftmengen im gesamten Fahrzeuginnenraum erzielt werden kann.

Durch die vorliegende Erfindung wird eine Abschlusskappenanordnung bereitgestellt, die zum einen beispielsweise aus Kunststoff- oder auch Metallmaterial sehr einfach gefertigt werden kann, die zum anderen aufgrund ihres internen Aufbaus eine verbesserte Wärmeabgabecharakteristik bereitstellt. Es sei noch einmal darauf hingewiesen, dass vor allem die verschiedenen angegebenen Strömungsrichtungen im Wesentlichen Haupttendenzen der Strömung in verschiedenen Bereichen definieren, dass verschiedene Teilströmungen auch in den verschiedenen Strömungskanalbereichen bzw. -zonen jedoch abweichende Strömungsrichtungen bzw. Strömungsrichtungskomponenten aufweisen können.

## Patentansprüche

1. Abschlusskappenanordnung für eine Wärmetauscheranordnung, insbesondere für ein Fahrzeugheizgerät, umfassend eine Aufnahmezone (14) zur Anbringung an der Wärmetauscheranordnung und zur Aufnahme eines die Wärmetauscheranordnung in einer ersten Strömungsrichtung (S₁) verlassenden Luftstroms, eine Mischzone (22) zum Vermischen der an verschiedenen Bereichen die Wärmetauscheranordnung verlassenden und in die Aufnahmezone (14) eintretenden Luftteilströme (F₁, F₂, F₃), wenigstens zwei Abgabezonen (24, 26) zum Abgeben des die Mischzone (22) verlassenden in einen Fahrzeuginnenraum einzuleitenden Luftstroms aus der Abschlusskappenanordnung (10).

2. Abschlusskappenanordnung nach Anspruch 1,
**dadurch gekennzeichnet, dass** die Mischzone (22) einen ersten Strömungskanalbereich (38) umfasst, welcher von der Aufnahmezone im Wesentlichen quer zur ersten Strömungsrichtung (S₁) weg führt.

3. Abschlusskappenanordnung nach Anspruch 1 oder 2,
**dadurch gekennzeichnet, dass** die Mischzone (22) eine geringere Strömungsquerschnittsfläche aufweist, als die Aufnahmezone (14).

4. Abschlusskappenanordnung nach einem der Ansprüche 1 bis 3,
**dadurch gekennzeichnet, dass** eine erste (24) der Abgabezonen (24, 26) einen zweiten Strömungskanalbereich (28) aufweist, welcher wenigstens abschnittsweise neben dem ersten Strömungskanalbereich (38) der Mischzone (22) liegend ausgebildet ist.

5. Abschlusskappenanordnung nach Anspruch 4,
**dadurch gekennzeichnet, dass** die Mischzone (22) von der ersten Abgabezone (24) durch einen Trennwandungsabschnitt (34) getrennt ist.

6. Abschlusskappenanordnung nach Anspruch 4 oder 5,
**dadurch gekennzeichnet, dass** der erste Strömungskanalbereich (38) für den die Mischzone (22) durchströmenden Luftstrom im Wesentlichen eine zweite Strömungsrichtung (S₂) vorgibt, die näherungsweise entgegengesetzt ist zu einer dritten Strömungsrichtung (S₃), welche der zweite Strömungskanalbereich (28) der ersten der Abgabezonen (24) für den in diese eintretenden Fluidteilstrom (F'₂) vorgibt.

7. Abschlusskappenanordnung nach einem der Ansprüche 1 bis 6,
**dadurch gekennzeichnet, dass** eine zweite (26) der Abgabezonen (24, 26) einen dritten Strömungskanalbereich (42) aufweist, welcher an den ersten Strömungskanalbereich (38) der Mischzone (22) anschließend ausgebildet ist und für einen in diesen eintretenden Luft teilstrom (F'₁) eine vierte Strömungsrichtung (S₄) vorgibt, welche näherungsweise der zweiten Strömungsrichtung (S₂) des durch die Mischzone (22) hindurchströmenden Luftstroms entspricht.

8. Abschlusskappenanordnung nach Anspruch 6 und Anspruch 7,
**dadurch gekennzeichnet, dass** die dritte Strömungsrichtung (S₃) der vierten Strömungsrichtung (S₄) im Wesentlichen entgegengesetzt gerichtet ist.

9. Abschlusskappenanordnung nach Anspruch 7 und Anspruch 4,
**dadurch gekennzeichnet, dass** der zweite Strömungskanalbereich (28) und der dritte Strömungskanalbereich (42) zueinander unterschiedliche Strömungsquerschnittsflächen aufweisen.

10. Abschlusskappenanordnung nach Anspruch 9,
**dadurch gekennzeichnet, dass** der zweite Strömungskanalbereich (28) eine geringere Strömungsquerschnittsfläche aufweist, als der dritte Strömungskanalbereich (42).

11. Abschlusskappenanordnung nach einem der Ansprüche 1 bis 10,
**dadurch gekennzeichnet, dass** die Abschlusskappenanordnung (10) einen zur Verbindung mit einer Wärmetauscheranordnung ausgebildeten Grundkörper (20) aufweist, in welchem wenigstens eine (24) der Abgabezonen (24, 26) als integraler Bestandteil ausgebildet ist, und dass wenigstens eine weitere (26) der Abgabezonen (24, 26) im Wesentlichen durch ein an den Grundkörper (20) anbringbares Ansatzteil (40) bereitgestellt ist.

## Claims

1. End cap assembly for a heat exchanger assembly, in particular for a vehicle heater, comprising a receiving zone (14) for attachment to the heat exchanger assembly and for receiving an air flow leaving the heat exchanger assembly in a first direction of flow (S₁), a mixing zone (22) for mixing the partial air flows (F₁, F₂, F₃) leaving the heat exchanger assembly at different regions and entering the receiving zone (14), and at least two discharging zones (24, 26) for discharging the air flow, which leaves the mixing zone (22) and is to be introduced into a vehicle interior, from the end cap assembly (10).

2. End cap assembly according to Claim 1, **characterized in that** the mixing zone (22) comprises a first flow duct region (38) which leads away from the receiving zone essentially transversely to the first direction of flow (S₁).

3. End cap assembly according to Claim 1 or 2, **characterized in that** the mixing zone (22) has a smaller flow cross-sectional area than the receiving zone (14).

4. End cap assembly according to one of Claims 1 to 3, **characterized in that** a first (24) of the discharging zones (24, 26) has a second flow duct region (28) which is designed such that it lies at least in some sections next to the first flow duct region (38) of the mixing zone (22).

5. End cap assembly according to Claim 4, **characterized in that** the mixing zone (22) is separated from the first discharging zone (24) by a partition section (34).

6. End cap assembly according to Claim 4 or 5, **characterized in that** the first flow duct region (38) for the air flow flowing through the mixing zone (22) essentially predetermines a second direction of flow (S₂) which is approximately opposed to a third direction of flow (S₃) predetermined by the second flow duct region (28) of the first of the discharging zones (24) for the partial fluid flow (F'₂) entering therein.

7. End cap assembly according to one of Claims 1 to 6, **characterized in that** a second (26) of the discharging zones (24, 26) has a third flow duct region (42) which is designed such that it adjoins the first flow duct region (38) of the mixing zone (22) and, for a partial air flow (F'₁) entering therein, predetermines a fourth direction of flow (S₄) which approximately corresponds to the second direction of flow (S₂) of the air flow flowing through the mixing zone (22).

8. End cap assembly according to Claim 6 and Claim 7, **characterized in that** the third direction of flow (S₃) is essentially directed in an opposed manner to the fourth direction of flow (S₄).

9. End cap assembly according to Claim 7 and Claim 4, **characterized in that** the second flow duct region (28) and the third flow duct region (42) have differing flow cross-sectional areas.

10. End cap assembly according to Claim 9, **characterized in that** the second flow duct region (28) has a smaller flow cross-sectional area than the third flow duct region (42).

11. End cap assembly according to one of Claims 1 to 10, **characterized in that** the end cap assembly (10) has a basic body (20) which is designed for connection to a heat exchanger assembly and in which at least one (24) of the discharging zones (24, 26) is designed as an integral part, and **in that** at least one further (26) of the discharging zones (24, 26) is essentially provided by an attachment part (40) which can be attached to the basic body (20).

## Revendications

1. Arrangement de capuchon d'embout pour un arrangement échangeur de chaleur, notamment pour un appareil de chauffage pour véhicule, comprenant une zone de réception (14) destinée au montage sur l'arrangement échangeur de chaleur et à recevoir un courant d'air qui quitte l'arrangement échangeur de chaleur dans un premier sens d'écoulement (S₁), une zone de mélange (22) destinée à mélanger les courants d'air partiels (F₁, F₂, F₃) qui quittent l'arrangement échangeur de chaleur en différentes zones et pénètrent dans la zone de réception (14), au moins deux zones de décharge (24, 26) pour délivrer le courant d'air qui quitte la zone de mélange (22) depuis l'arrangement de capuchon d'embout (10) et à insuffler dans l'habitacle d'un véhicule.

2. Arrangement de capuchon d'embout selon la revendication 1, **caractérisé en ce que** la zone de mélange (22) comprend une première zone de canal d'écoulement (38) qui s'éloigne de la zone de réception pour l'essentiel transversalement par rapport au premier sens d'écoulement (S₁).

3. Arrangement de capuchon d'embout selon la revendication 1 ou 2, **caractérisé en ce que** la zone de mélange (22) présente une surface de section transversale d'écoulement plus petite que celle de la zone de réception (14).

4. Arrangement de capuchon d'embout selon l'une des revendications 1 à 3, **caractérisé en ce qu'**une première (24) des zones de décharge (24, 26) présente une deuxième zone de canal d'écoulement (28) qui est formée, au moins par sections, en position couchée à côté de la première zone de canal d'écoulement (38) de la zone de mélange (22).

5. Arrangement de capuchon d'embout selon la revendication 4, **caractérisé en ce que** la zone de mélange (22) est séparée de la première zone de décharge (24) par une section de paroi de séparation (34).

6. Arrangement de capuchon d'embout selon la revendication 4 ou 5, **caractérisé en ce que** la première zone de canal d'écoulement (38) prédéfinit pour le courant d'air qui traverse la zone de mélange (22) essentiellement un deuxième sens d'écoulement (S₂) qui est approximativement opposé à un troisième sens d'écoulement (S₃), lequel est prédéfini par la deuxième zone de canal d'écoulement (28) de la première des zones de décharge (24) pour le courant de fluide partiel (F'₂) qui y pénètre.

7. Arrangement de capuchon d'embout selon l'une des revendications 1 à 6, **caractérisé en ce que** la deuxième (26) des zones de décharge (24, 26) présente une troisième zone de canal d'écoulement (42) qui est formée rattachée à la première zone de canal d'écoulement (38) de la zone de mélange (22) et qui prédéfinit pour un courant d'air partiel (F'₁) qui y pénètre un quatrième sens d'écoulement (S₄) qui est approximativement opposé au deuxième sens d'écoulement (S₂), lequel correspond au courant d'air qui traverse la zone de mélange (22).

8. Arrangement de capuchon d'embout selon la revendication 6 et la revendication 7, **caractérisé en ce que** le troisième sens d'écoulement (S₃) est pour l'essentiel opposé au quatrième sens d'écoulement (S₄).

9. Arrangement de capuchon d'embout selon la revendication 7 et la revendication 4, **caractérisé en ce que** la deuxième zone de canal d'écoulement (28) et la troisième zone de canal d'écoulement (42) présentent des surfaces de section transversale d'écoulement différentes l'une de l'autre.

10. Arrangement de capuchon d'embout selon la revendication 9, **caractérisé en ce que** la deuxième zone de canal d'écoulement (28) présente une surface de section transversale d'écoulement plus petite que celle de la troisième zone de canal d'écoulement (42).

11. Arrangement de capuchon d'embout selon l'une des revendications 1 à 10, **caractérisé en ce que** l'arrangement de capuchon d'embout (10) présente un corps de base (20) configuré pour être relié avec un arrangement échangeur de chaleur dans lequel au moins l'une (24) des zones de décharge (24, 26) est réalisée sous la forme d'un composant intégré et qu'au moins une autre (26) des zones de décharge (24, 26) est fournie pour l'essentiel par une pièce rapportée (40) pouvant être montée sur le corps de base (20).
